# EUROPEAN PATENT APPLICATION

(11) **EP 4 633 210 A1**
(43) Date of publication of application: **15.10.2025**
(21) Application number: 23899927.0
(22) Date of filing: 04.12.2023
(51) Int. Cl.: H04W 4/70

(54) **MESSAGE TRANSMISSION METHOD AND APPARATUS, UE, AND STORAGE MEDIUM**

(30) Priority: 05.12.2022 CN 202211552357
(71) Applicant: Vivo Mobile Communication Co., Ltd., Dongguan, Guangdong 523863 (CN)
(72) Inventor: ZHENG, Qian, Dongguan, Guangdong 523863 (CN)
(74) Representative: Murgitroyd & Company
(86) International application number: PCT/CN2023/136231
(87) International publication number: WO 2024/120351

(57) **Abstract**

This application pertains to the field of communication technologies, and discloses a message transmission method and apparatus, UE, and a storage medium. The message transmission method in embodiments of this application includes: sending, by first UE, a first message to second UE by using a single carrier, where the first message is a message of an SL signaling radio bearer.

## Description

### CROSS-REFERENCE TO RELATED APPLICATION

This application claims priority to Chinese Patent Application No. 202211552357.1, filed in China on December 5, 2022, which is incorporated herein by reference in its entirety.

### TECHNICAL FIELD

This application pertains to the field of communication technologies, and specifically relates to a message transmission method and apparatus, UE, and a storage medium.

### BACKGROUND

Currently, in a scenario in which a single-carrier operation and a multi-carrier operation of a sidelink (Sidelink, SL) broadcast (or groupcast) service coexist, when a protocol layer above an access stratum (Access Stratum, AS) of user equipment (User Equipment, UE) provides service-frequency mapping information for the AS, at least two carriers are provided for the AS for a service supporting sidelink carrier aggregation (Sidelink Carrier Aggregation, SL CA), and one carrier is provided for the AS for a service not supporting SL CA.

However, for an SL service and a signaling plane message, a transmission mode of the UE is not clear, which may lead to a packet loss due to an uncertain transmission mode.

### SUMMARY

Embodiments of this application provide a message transmission method and apparatus, UE, and a storage medium, to resolve a problem that transmission quality is poor because UE does not know how to determine a transmission mode for an SL service and a signaling plane message.

According to a first aspect, a message transmission method is provided. The method includes: sending, by first UE, a first message to second UE by using a single carrier, where the first message is a message of an SL signaling radio bearer.

According to a second aspect, a message transmission apparatus is provided. The apparatus includes a sending module. The sending module is configured to send a first message to second UE by using a single carrier, where the first message is a message of an SL signaling radio bearer.

According to a third aspect, a service transmission method is provided. The method includes: receiving, by second UE, a first message sent by first UE by using a first carrier; and sending, by the second UE, a third message to the first UE by using a second carrier, where either of the first carrier and the second carrier is a single carrier, and the first message and the third message are both messages of an SL signaling radio bearer.

According to a fourth aspect, a message transmission apparatus is provided. The apparatus includes a receiving module and a sending module. The receiving module is configured to receive a first message sent by first UE by using a first carrier. The sending module is configured to send a third message to the first UE by using a second carrier, where either of the first carrier and the second carrier is a single carrier, and the first message and the third message are both messages of an SL signaling radio bearer.

According to a fifth aspect, a service transmission method is provided. The method includes: obtaining, by target UE, a layer 2 ID corresponding to a target service, where the target service is a broadcast service or a groupcast service; and transmitting, by the target UE, the target service by using a target carrier based on a target mapping relationship, where the target carrier is a single carrier or at least two carriers, and the target mapping relationship is related to the layer 2 ID.

According to a sixth aspect, a service transmission apparatus is provided. The apparatus includes an obtaining module and a transmission module. The obtaining module is configured to obtain a layer 2 ID corresponding to a target service, where the target service is a broadcast service or a groupcast service. The transmission module is configured to transmit the target service by using a target carrier based on a target mapping relationship, where the target carrier is a single carrier or at least two carriers, and the target mapping relationship is related to the layer 2 ID.

According to a seventh aspect, UE is provided. The UE includes a processor and a memory. The memory stores a program or instructions capable of running on the processor. When the program or instructions are executed by the processor, the steps of the method according to the first aspect are implemented.

According to an eighth aspect, UE is provided. The UE includes a processor and a memory. The memory stores a program or instructions capable of running on the processor. When the program or instructions are executed by the processor, the steps of the method according to the third aspect are implemented.

According to a ninth aspect, UE is provided. The UE includes a processor and a memory. The memory stores a program or instructions capable of running on the processor. When the program or instructions are executed by the processor, the steps of the method according to the fifth aspect are implemented.

According to a tenth aspect, UE is provided and includes a processor and a communication interface. The communication interface is configured to send a first message to second UE by using a single carrier, where the first message is a message of an SL signaling radio bearer; or
the communication interface is configured to receive a first message sent by first UE by using a first carrier; and send a third message to the first UE by using a second carrier, where either of the first carrier and the second carrier is a single carrier, and the first message and the third message are both messages of an SL signaling radio bearer; or
the processor is configured to obtain a layer 2 ID corresponding to a target service, where the target service is a broadcast service or a groupcast service; and transmit the target service by using a target carrier based on a target mapping relationship, where the target carrier is a single carrier or at least two carriers, and the target mapping relationship is related to the layer 2 ID.

According to an eleventh aspect, a communication system is provided and includes the UE according to the seventh aspect and the UE according to the eighth aspect. The UE according to the seventh aspect may be configured to perform the steps of the message transmission method according to the first aspect. The UE according to the eighth aspect may be configured to perform the steps of the message transmission method according to the third aspect.

According to a twelfth aspect, a readable storage medium is provided. The readable storage medium stores a program or instructions. When the program or instructions are executed by a processor of first UE, the steps of the method according to the first aspect are implemented, or when the program or instructions are executed by a processor of second UE, the steps of the method according to the third aspect are implemented, or when the program or instructions are executed by a processor of target UE, the steps of the method according to the fifth aspect are implemented.

According to a thirteenth aspect, a chip is provided. The chip includes a processor and a communication interface. The communication interface is coupled to the processor. The processor is configured to run a program or instructions to implement the method according to the first aspect, or implement the method according to the third aspect, or implement the method according to the fifth aspect.

According to a fourteenth aspect, a computer program or program product is provided. The computer program or program product is stored in a storage medium. The computer program or program product is executed by at least one processor to implement the method according to the first aspect, or implement the method according to the third aspect, or implement the method according to the fifth aspect.

In the embodiments of this application, the first UE can send the first message to the second UE by using the single carrier, where the first message is a message of the SL signaling radio bearer. According to this solution, because the first UE can send the message of the SL signaling radio bearer to the second UE by using the single carrier, specific use of a single carrier for transmitting an SL service and a signaling plane message is defined for the UE, thereby ensuring transmission quality.

### BRIEF DESCRIPTION OF DRAWINGS

FIG. 1 is a block diagram of a wireless communication system to which an embodiment of this application may be applied;
FIG. 2 is a schematic diagram of SL communication;
FIG. 3 is a schematic diagram of inter-layer interaction in an SL CA scenario;
FIG. 4 is a schematic diagram of an SL discovery mode;
FIG. 5 is a first flowchart of a message transmission method according to an embodiment of this application;
FIG. 6 is a first schematic diagram of a message transmission method according to an embodiment of this application;
FIG. 7 is a second flowchart of a message transmission method according to an embodiment of this application;
FIG. 8 is a second schematic diagram of a message transmission method according to an embodiment of this application;
FIG. 9 is a flowchart of a service transmission method according to an embodiment of this application;
FIG. 10 is a first schematic diagram of a message transmission apparatus according to an embodiment of this application;
FIG. 11 is a second schematic diagram of a message transmission apparatus according to an embodiment of this application;
FIG. 12 is a schematic diagram of a service transmission apparatus according to an embodiment of this application;
FIG. 13 is a schematic diagram of UE according to an embodiment of this application; and
FIG. 14 is a schematic diagram of a hardware structure of UE according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division MultipleAccess, TDMA), frequency division multiple access (Frequency Division MultipleAccess, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

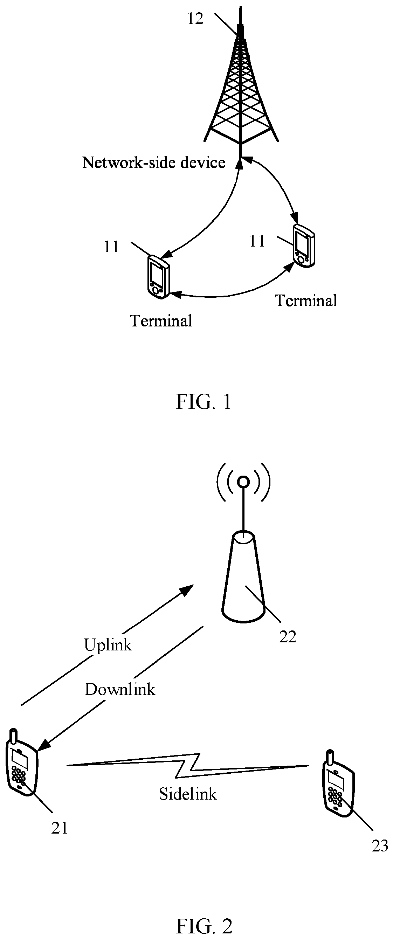

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A message transmission method and apparatus, UE, and a storage medium provided in the embodiments of this application are hereinafter described in detail by using some embodiments and application scenarios thereof with reference to the accompanying drawings.

Starting from Release 12, an LTE system supports SL communication, for direct data transmission between UEs without using a network-side device. FIG. 2 is a schematic diagram of SL communication. As shown in FIG. 2, UE 21 may perform direct data transmission with UE 23 through a sidelink without using a network-side device 22.

A design of an LTE SL is applicable to specific public safety affairs. For example, the LTE SL may be used for emergency communication on a disaster site such as a fire or an earthquake, or for vehicle-to-everything (vehicle to everything, V2X) communication. Vehicle-to-everything communication may include basic security communication, advanced (autonomous) driving, platooning, sensor expansion, and the like. Because the LTE SL supports only broadcast communication, the LTE SL is mainly used for basic security communication. Other advanced V2X services with strict quality of service (Quality of Service, QoS) requirements in terms of latency and reliability may be supported by a 5G NR SL.

5G NR SL communication may include the following three transmission modes:
(1) SL broadcast communication (SL Broadcast communication),
(2) SL groupcast communication (SL Groupcast communication); and
(3) SL unicast communication (SL Unicast communication).

SL unicast communication is one-to-one (one-to-one) transmission. SL broadcast communication and SL groupcast communication are one-to-many (one-to-many) transmission, but SL broadcast communication does not involve a concept of UE belonging to a same group. SL unicast communication and SL groupcast communication support a physical layer hybrid automatic repeat request (Hybrid Automatic Repeat Request, HARQ) feedback mechanism.

Currently, two sidelink resource allocation modes are supported for sidelink UE.
A. Base station scheduling mode (that is, mode 1): A network-side device (base station) controls and allocates resources to each UE.
B. UE autonomous mode (that is, mode 2): Each UE autonomously selects resources.

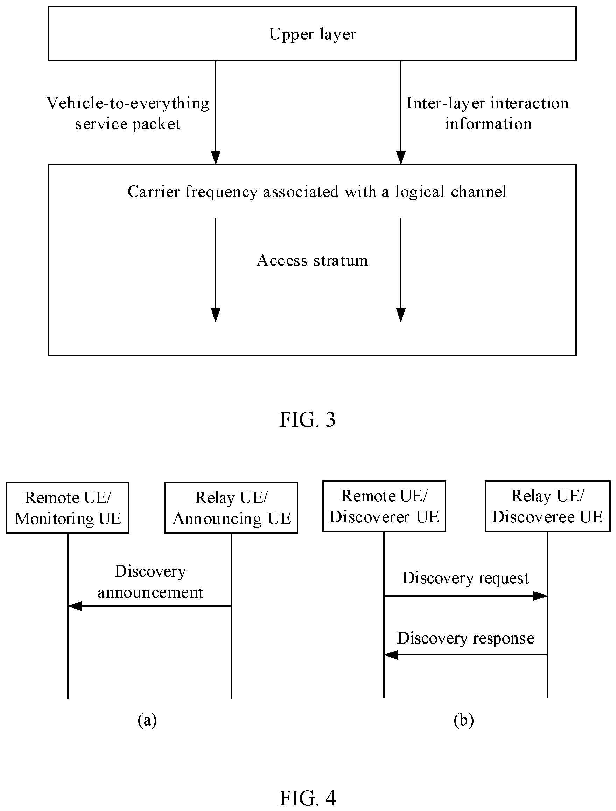

In the LTE SL, an SL CA transmission mode is supported, and a basic carrier selection or reselection process thereof is as follows:
1. For a specific V2X service, an upper layer (upper layers, that is, a collective term for protocol layers above an AS, such as a V2X layer, a ProSe layer, or an application layer) of UE provides a mapping relationship between service types and carrier frequencies (that is, a mapping between V2X service types and V2X frequencies) for the AS of the UE. During transmission over an SL air interface, the AS of the UE needs to ensure that a corresponding service is sent on a corresponding carrier frequency.
2. If the UE works in mode 1, the base station allocates SL resources based on information reported in a sidelink buffer status report (Sidelink Buffer Status Report, SL BSR) and a sidelink UE information message of the UE, to ensure that a corresponding service is sent on a corresponding carrier frequency. If the UE works in mode 2, the AS of the UE performs the carrier selection or reselection procedure in a case that a condition for triggering carrier selection or reselection is met. Specifically, the following steps are included:
   Step 1: The UE determines that the condition for triggering carrier selection or reselection is met, and performs the carrier selection or reselection procedure.
   Step 2: At least one carrier frequency allowed for use is determined for each logical channel. FIG. 3 is a schematic diagram of inter-layer interaction in an SL CA scenario. As shown in FIG. 3, when service data (such as V2X service packets) arrives in at least one logical channel of the AS, at least one carrier frequency associated with each logical channel may be determined based on inter-layer interaction information.
   Step 3: Each carrier frequency (F1 for short) in step 1 is determined one by one, and after the at least one carrier frequency is traversed, at least one candidate carrier (candidate carrier(s)) and/or at least one selected carrier (selected carrier(s)) may be determined. Specifically, two cases may be distinguished: initial selection and reselection.

### Case 1: Evaluation on initial carrier selection

If there is no SL grant (sidelink grant) on F1, the following is further determined: If a channel busy ratio (Channel Busy Ratio, CBR) of F1 is less than a first CBR threshold, F1 is considered as a candidate carrier.

The first CBR threshold is determined based on a first CBR-PPPP mapping relationship configured or preconfigured by the network and a logical channel priority value corresponding to the logical channel.

### Case 2: Evaluation on carrier reselection

If there is an SL grant on F1, the following is further determined: If the CBR of F1 is less than a second CBR threshold, F1 continues to be selected, that is, F1 is considered as a selected carrier. If the CBR of F1 is greater than or equal to the second CBR threshold, it is considered that F1 meets a carrier reselection condition, that is, F1 is considered as a candidate carrier.

The second CBR threshold is determined based on a second CBR-PPPP mapping relationship configured or preconfigured by the network and the logical channel priority value corresponding to the logical channel.

Step 4: Each carrier frequency of the at least one candidate carrier in step 2 is sorted in ascending order of CBR values of carrier frequencies, and some carrier frequencies of the at least one candidate carrier are sequentially selected, starting from a carrier frequency with a smallest CBR value. A specific quantity of carrier frequencies selected is determined based on a UE capability, and these selected candidate carriers are also considered as selected carriers.

In addition, different from SL communication, an SL discovery (SL discovery) service is newly introduced. An SL discovery procedure supports two modes: model A (mode A) and model B (mode B). FIG. 4 is a schematic diagram of an SL discovery mode. Model A is shown in (a) in FIG. 4. In model A, announcing UE (announcing UE) may announce some information, which may be used by nearby UE allowed to be discovered, and monitoring UE (monitoring UE) may monitor some information of interest near the announcing UE. Model B is shown in (b) in FIG. 4. In model B, discoverer UE (discoverer UE) may transmit a discovery request, which includes some information about content of interest. After receiving the discovery request, discoveree UE (discoveree UE) may respond to the request of the discoverer UE for some related information.

As can be learned from above, in a scenario in which an SL single-carrier operation and a multi-carrier operation coexist, currently, a solution of the related art mainly depends on an upper-layer implementation. For example, when the upper layer provides service-frequency mapping information for the AS, more than one frequency is provided for the AS for a service supporting SL CA, and only one frequency is provided for the AS for a service not supporting SL CA. Therefore, based on a quantity of obtained frequencies, the AS can determine whether to use an SL CA function. A disadvantage of the foregoing is that the mapping relationship is relatively static or semi-static, and that the upper layer cannot take congestion of actual resources into account. Therefore, QoS of some frequencies cannot be ensured. Especially for services that do not support SL CA, if all nearby SL UEs focus on several uniquely mapped frequencies for transmission, the frequencies become more congested, and consequently, QoS performance in SL transmission cannot be ensured.

Particularly, how the UE uses a single carrier or multiple carriers to transmit an SL unicast service and a signaling plane message during SL unicast communication and SL discovery is not defined.

To resolve the foregoing problem, in a message transmission method provided in an embodiment of this application, first UE may send a first message to second UE by using a single carrier, where the first message is a message of an SL signaling radio bearer. According to this solution, because the first UE can send the message of the SL signaling radio bearer to the second UE by using the single carrier, specific use of a single carrier for transmitting an SL unicast service and a signaling plane message is defined for the UE.

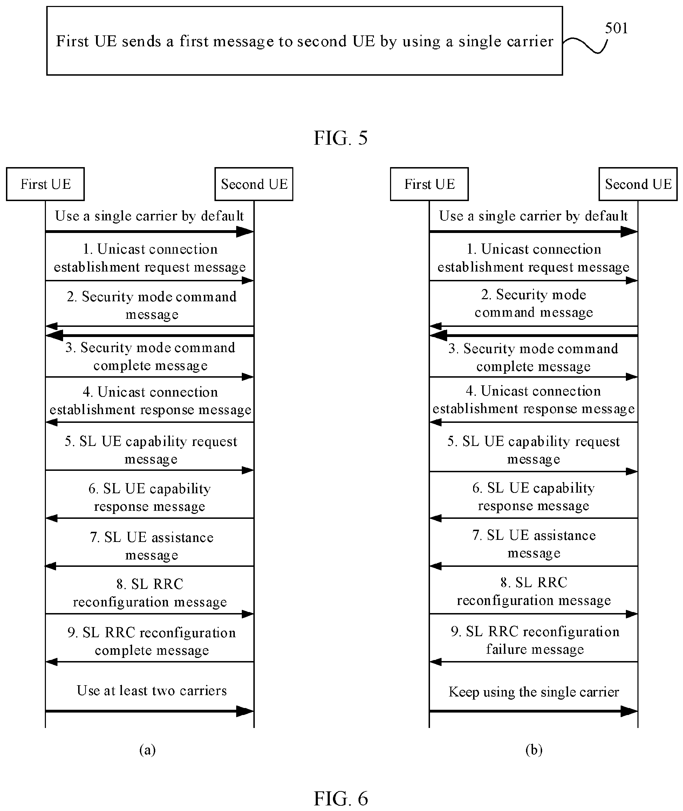

An embodiment of this application provides a message transmission method. FIG. 5 is a flowchart of a message transmission method according to an embodiment of this application. As shown in FIG. 5, the message transmission method provided in this embodiment of this application may include the following step 501.

Step 501: First UE sends a first message to second UE by using a single carrier.

The first message is a message of an SL signaling radio bearer.

Optionally, in this embodiment of this application, the message of the SL signaling radio bearer may be any PC5-S message, PC5 RRC message, or the like carried on an SL-SRB X (X is an integer, and values thereof include but are not limited to 0, 1, 2, 3, and 4).

Optionally, in this embodiment of this application, the message of the SL signaling radio bearer may include at least one of the following: a message in an SL unicast connection establishment process; a message in a sidelink radio resource control (Sidelink Radio Resource Control, SL RRC) reconfiguration process; and a message in an SL discovery process.

In this embodiment of this application, because the message of the SL signaling radio bearer may include at least one of the message in the SL unicast connection establishment process, the message in the SL RRC reconfiguration process, and the message in the SL discovery process, a range of signaling plane messages sent by the first UE to the second UE by using the single carrier can be increased.

Optionally, in this embodiment of this application, the first message may include a first target message, and the first target message includes at least one of the following (1.1) to (1.6):
(1.1) a unicast connection establishment request message, where the unicast connection establishment request message is used to request to establish a unicast connection to the second UE;
(1.2) a security mode command complete message;
(1.3) an SL UE assistance message, where the SL UE assistance message includes preferred carrier configuration information;
(1.4) an SL UE capability request message;
(1.5) an SL UE capability response message; and
(1.6) an SL RRC reconfiguration message.

It may be understood that each of the foregoing messages (1.1) to (1.5) is a message in the SL unicast connection establishment process, and the foregoing (1.6) SL RRC reconfiguration message is a message in the SL RRC reconfiguration process.

Optionally, in this embodiment of this application, the SL RRC reconfiguration message may be a PC5 RRC reconfiguration message.

In this embodiment of this application, because the first message may include the first target message, and the first target message may include at least one of the foregoing (1.1) to (1.6), the range of signaling plane messages sent by the first UE to the second UE by using the single carrier can be further increased.

Optionally, in this embodiment of this application, the single carrier may be determined based on one of the following: a first SL carrier configuration in at least one SL carrier configuration, where the at least one SL carrier configuration is configured or preconfigured by a network-side device; and a default SL carrier configuration, where the default SL carrier configuration is configured or preconfigured by the network-side device.

In this embodiment of this application, because the single carrier may be determined based on either the first SL carrier configuration or the default SL carrier configuration, the first UE can send the first message to the second UE based on the default single carrier configuration, thereby simplifying the process of sending the first message by the first UE.

Optionally, in this embodiment of this application, the first UE may send the first message to the second UE by using the single carrier, starting from sending a first unicast connection establishment request message.

In the message transmission method provided in this embodiment of this application, because the first UE can send the message of the SL signaling radio bearer to the second UE by using the single carrier, specific use of a single carrier for transmitting an SL unicast service and a signaling plane message is defined for the UE.

Optionally, in this embodiment of this application, the first message may be the SL RRC reconfiguration message, and the SL RRC reconfiguration message includes carrier configuration information. In this case, after step 501, the message transmission method provided in this embodiment of this application may further include the following step 502.

Step 502: In a case that a first condition is met, the first UE performs at least one of the following: sending a second message to the second UE by using at least two carriers, where the second message is a message of the SL signaling radio bearer; and performing unicast service transmission with the second UE by using at least two carriers.

Optionally, in this embodiment of this application, the first UE sends the second message to the second UE by using the at least two carriers, that is, the first UE switches from using the single carrier to using the at least two carriers, and sends the second message to the second UE.

Optionally, in this embodiment of this application, a carrier configuration indicated by the carrier configuration information may be an initial (that is, first) configuration.

In this embodiment of this application, because the carrier configuration indicated by the carrier configuration information may be the initial configuration, the SL RRC reconfiguration process can be simplified.

Optionally, in this embodiment of this application, the first condition may include at least one of the following (2.1) and (2.2):

(2.1) The carrier configuration information includes N lists of SL carrier configurations, and the first UE receives an SL RRC reconfiguration complete message from the second UE, where N is an integer greater than 1.

Optionally, in this embodiment of this application, the SL carrier configuration may include at least one of the following:
a corresponding SL frequency index, where for example, if there are N lists of SL carrier configurations, frequency indexes may be numbered 0, 1, ..., N-1; and
corresponding SL frequency position information, where for example, the corresponding SL frequency position information may be an NR absolute radio frequency channel number (NR Absolute Radio Frequency Channel Number, NR-ARFCN) value corresponding to an SL SSB.

Optionally, in this embodiment of this application, the SL RRC reconfiguration complete message is used to indicate that the second UE has completed the SL RRC reconfiguration.

(2.2) The first UE receives an SL RRC reconfiguration complete message from the second UE, where the SL RRC reconfiguration complete message includes M lists of SL carrier configurations, where M is a positive integer greater than 1.

In this embodiment of this application, because the first condition may include at least one of the foregoing (2.1) and (2.2), flexibility of switching to using the at least two carriers for signaling plane message transmission by the first UE can be improved.

Optionally, in this embodiment of this application, the at least two carriers may be indicated by the SL RRC reconfiguration message or the SL RRC reconfiguration complete message.

In this embodiment of this application, in the case that the first condition is met, the first UE can send the message of the SL signaling radio bearer to the second UE by using the at least two carriers, or perform unicast service transmission with the second UE by using the at least two carriers. Therefore, flexibility of signaling plane message transmission by the first UE can be improved.

Optionally, in this embodiment of this application, the first message may be the SL RRC reconfiguration message, and the SL RRC reconfiguration message includes carrier configuration information. In this case, after step 501, the message transmission method provided in this embodiment of this application may further include the following step 503.

Step 503: In a case that a second condition is met, the first UE performs at least one of the following: keeping sending a second message to the second UE by using the single carrier, where the second message is a message of the SL signaling radio bearer; maintaining unicast service transmission with the second UE by using the single carrier; and re-initiating an SL RRC reconfiguration process until a first condition is met.

Optionally, in this embodiment of this application, the second condition may include at least one of the following (3.1) to (3.5):
(3.1) The carrier configuration information includes one SL carrier configuration, and the first UE receives an SL RRC reconfiguration complete message from the second UE.
(3.2) The first UE receives an SL RRC reconfiguration complete message from the second UE, where the SL RRC reconfiguration complete message includes one SL carrier configuration.
(3.3) The first UE receives an SL RRC reconfiguration failure message from the second UE.

Optionally, in this embodiment of this application, the SL RRC reconfiguration failure message is used to indicate that the SL RRC reconfiguration of the second UE fails (that is, the second UE cannot successfully apply or refuses to apply at least part of the N lists of SL carrier configurations).

(3.4) A unicast connection establishment process between the first UE and the second UE fails.

For example, an upper layer of the first UE terminates a PC5 unicast connection establishment procedure for some reasons.

(3.5) The SL RRC reconfiguration process of the first UE fails.

Optionally, in this embodiment of this application, in a case that the second condition is the foregoing (3.1), the single carrier may be indicated by the SL RRC reconfiguration message or the SL RRC reconfiguration complete message.

Optionally, in this embodiment of this application, when the second condition includes the foregoing (3.1), the SL RRC reconfiguration complete message does not need to carry any carrier configuration information, that is, the one SL carrier configuration carried in the SL RRC reconfiguration message is successfully applied.

Optionally, in this embodiment of this application, when the second condition includes the foregoing (3.2), the SL RRC reconfiguration complete message carries the carrier configuration, and mainly in a case that the SL RRC reconfiguration message includes at least one carrier configuration, the second UE further selects one SL carrier configuration, and notifies the peer UE by using the SL RRC reconfiguration message, thereby successfully applying the one SL carrier configuration carried in the SL RRC reconfiguration message.

Optionally, in this embodiment of this application, the SL RRC reconfiguration process of the first UE fails, that is, after sending the SL RRC reconfiguration message to the second UE, the first UE does not receive any response message (including the SL RRC reconfiguration complete message and the SL RRC reconfiguration failure message) from the second UE within a preset time.

In this embodiment of this application, because the second condition may include at least one of the foregoing (3.1) to (3.5), flexibility of maintaining signaling plane message transmission by the first UE by using the single carrier can be improved.

With reference to the accompanying drawings, the following describes a message transmission method provided in an embodiment of this application by using an example.

For example, FIG. 6 is a schematic diagram of a PC5 configuration process in a direction from first UE to second UE. As shown in (a) in FIG. 6, starting from sending a first unicast connection establishment request message, the first UE sends a first message to the second UE by using a single carrier by default, where the first message includes at least one of a unicast connection establishment request message, a security mode command complete message, an SL UE capability request message, and an SL RRC reconfiguration message (including the foregoing carrier configuration information); and after receiving an SL RRC reconfiguration complete message from the second UE, the first UE switches from using the single carrier to using at least two carriers and continues to send signaling plane messages to the second UE. As shown in (b) in FIG. 6, starting from sending a first unicast connection establishment request message, the first UE sends a first message to the second UE by using a single carrier by default, where the first message includes at least one of a unicast connection establishment request message, a security mode command complete message, an SL UE capability request message, and an SL RRC reconfiguration message (including the foregoing carrier configuration information); and after receiving an SL RRC reconfiguration failure message from the second UE, the first UE continues to keep sending a signaling plane message to the second UE by using the single carrier.

In this embodiment of this application, in a case that a second condition is met, the first UE may keep sending a message of an SL signaling radio bearer to the second UE by using the single carrier, or maintain unicast service transmission with the second UE by using the single carrier, or re-initiate an SL RRC reconfiguration process, until a first condition is met. Therefore, flexibility of signaling plane message transmission by the first UE can be further improved.

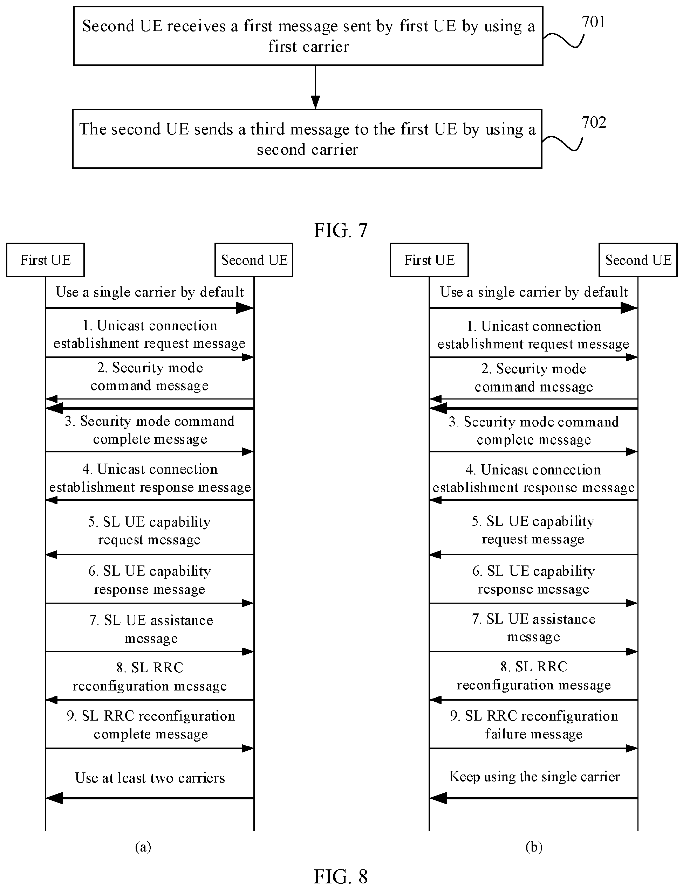

An embodiment of this application provides a message transmission method. FIG. 7 is a flowchart of a message transmission method according to an embodiment of this application. As shown in FIG. 7, the message transmission method provided in this embodiment of this application may include the following step 701 and step 702.

Step 701: Second UE receives a first message sent by first UE by using a first carrier.

Step 702: The second UE sends a third message to the first UE by using a second carrier.

Either of the first carrier and the second carrier is a single carrier, and the first message and the third message are both messages of an SL signaling radio bearer.

Optionally, in this embodiment of this application, the first carrier and the second carrier may be the same or different.

Optionally, in this embodiment of this application, the message of the SL signaling radio bearer may include at least one of the following: a message in an SL unicast connection establishment process; a message in an SL RRC reconfiguration process; and a message in an SL discovery process.

Optionally, in this embodiment of this application, the third message may include a second target message, and the second target message includes at least one of the following (4.1) to (4.6):
(4.1) a security mode command message;
(4.2) a unicast connection establishment response message;
(4.3) an SL UE assistance message, where the SL UE assistance message includes preferred carrier configuration information;
(4.4) an SL UE capability request message;
(4.5) an SL UE capability response message; and
(4.6) an SL RRC reconfiguration message.

Optionally, in this embodiment of this application, the first carrier and/or the second carrier may be determined based on one of the following: a first SL carrier configuration in at least one SL carrier configuration, where the at least one SL carrier configuration is configured or preconfigured by a network-side device; and a default SL carrier configuration, where the default SL carrier configuration is configured or preconfigured by the network-side device.

Optionally, in this embodiment of this application, the second UE may send the third message to the first UE by using the second carrier, starting from sending a first unicast connection establishment response message.

In the message transmission method provided in this embodiment of this application, because the second UE can receive the message of the SL signaling radio bearer sent by the first UE and send the message of the SL signaling radio bearer to the first UE both by using single carriers, specific use of a single carrier for transmitting an SL unicast service and a signaling plane message is defined for the UE.

Optionally, in this embodiment of this application, the third message may be the SL RRC reconfiguration message, and the SL RRC reconfiguration message includes carrier configuration information. In this case, after step 702, the message transmission method provided in this embodiment of this application may further include the following step 703.

Step 703: In a case that a third condition is met, the second UE performs at least one of the following: sending a fourth message to the first UE by using at least two carriers, where the fourth message is a message of the SL signaling radio bearer; and performing unicast service transmission with the first UE by using at least two carriers.

Optionally, in this embodiment of this application, a carrier configuration indicated by the carrier configuration information may be an initial configuration.

Optionally, in this embodiment of this application, the third condition may include at least one of the following (5.1) and (5.2):
(5.1) The carrier configuration information includes L SL carrier configurations, and the second UE receives an SL RRC reconfiguration complete message from the first UE, where L is an integer greater than 1.
(5.2) The second UE receives an SL RRC reconfiguration complete message from the first UE, where the SL RRC reconfiguration complete message includes K SL carrier configurations, where K is a positive integer greater than 1.

Optionally, in this embodiment of this application, the third message may be the SL RRC reconfiguration message, and the SL RRC reconfiguration message includes carrier configuration information. In this case, after step 702, the message transmission method provided in this embodiment of this application may further include the following step 704.

Step 704: In a case that a fourth condition is met, the second UE performs at least one of the following: keeping sending a fourth message to the first UE by using the second carrier, where the fourth message is a message of the SL signaling radio bearer; maintaining unicast service transmission with the first UE by using the second carrier; and re-initiating an SL RRC reconfiguration process until a third condition is met.

Optionally, in this embodiment of this application, the fourth condition may include at least one of the following (6.1) to (6.5):
(6.1) The carrier configuration information includes one SL carrier configuration, and the second UE receives an SL RRC reconfiguration complete message from the first UE.
(6.2) The second UE receives an SL RRC reconfiguration complete message from the first UE, where the SL RRC reconfiguration complete message includes one SL carrier configuration.
(6.3) The second UE receives an SL RRC reconfiguration failure message from the first UE.
(6.4) A unicast connection establishment process between the second UE and the first UE fails.
(6.5) The SL RRC reconfiguration process of the second UE fails.

With reference to the accompanying drawings, the following describes a message transmission method provided in an embodiment of this application by using an example.

For example, FIG. 8 is a schematic diagram of a PC5 configuration process in a direction from second UE to first UE. As shown in (a) in FIG. 8, the second UE sends a third message to the first UE by using a single carrier by default, where the third message includes at least one of a security mode command message, a unicast connection establishment response message, an SL UE capability request message, and an SL RRC reconfiguration message (including the foregoing carrier configuration information); and after receiving an SL RRC reconfiguration complete message from the first UE, the second UE switches from using the single carrier to using at least two carriers and continues to send signaling plane messages to the first UE. As shown in (b) in FIG. 8, the second UE sends a third message to the first UE by using a single carrier by default, where the third message includes at least one of a security mode command message, a unicast connection establishment response message, an SL UE capability request message, and an SL RRC reconfiguration message (including the foregoing carrier configuration information); and after receiving an SL RRC reconfiguration failure message from the first UE, the second UE continues to keep sending a signaling plane message to the first UE by using the single carrier.

For detailed descriptions in this embodiment of this application and a technical effect that can be achieved in each step, refer to related descriptions in the foregoing method embodiment on the first UE side. To avoid repetition, details are not described herein again.

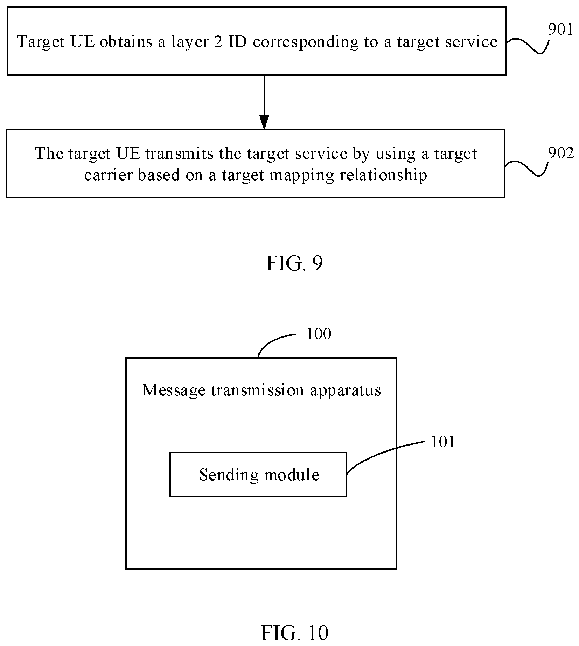

An embodiment of this application provides a service transmission method. FIG. 9 is a flowchart of a service transmission method according to an embodiment of this application. As shown in FIG. 9, the service transmission method provided in this embodiment of this application may include the following step 901 and step 902.

Step 901: Target UE obtains a layer 2 ID corresponding to a target service.

In this embodiment of this application, the target service is a broadcast service or a groupcast service.

Optionally, in this embodiment of this application, the target service may include a medium access control protocol data unit (Medium Access Control Protocol Data Unit, MAC PDU) corresponding to the layer 2 ID.

Step 902: The target UE transmits the target service by using a target carrier based on a target mapping relationship.

In this embodiment of this application, the target carrier is a single carrier or at least two carriers, and the target mapping relationship is related to the layer 2 ID.

Optionally, in this embodiment of this application, the transmitting the target service includes at least one of the following: sending the target service and receiving the target service.

Optionally, in this embodiment of this application, the target mapping relationship may be received by an AS of the target UE from an upper layer.

Optionally, in this embodiment of this application, the target mapping relationship may include at least one of the following (7.1) to (7.3):
(7.1) a mapping relationship between at least one service type and at least one layer 2 ID;
(7.2) a mapping relationship between at least one layer 2 ID and at least one carrier; and
(7.3) a mapping relationship between at least one service type and at least one transmission configuration, where
the at least one layer 2 ID includes the layer 2 ID.

In this embodiment of this application, because the target mapping relationship may include at least one of the foregoing (7.1) to (7.3), the target UE can transmit the target service by using the target carrier based on different mapping relationships, thereby improving flexibility of transmitting the target service by the target UE by using the target carrier.

Optionally, in this embodiment of this application, each of the at least one transmission configuration indicates any one of the following: no support for an SL CA operation; support for an SL CA operation; no support for an SL single-carrier operation; and support for an SL single-carrier operation.

In this embodiment of this application, because each transmission configuration any indicate any one of no support for the SL CA operation, support for the SL CA operation, no support for the SL single-carrier operation, and support for the SL single-carrier operation, when the target UE transmits the target service by using the target carrier based on the mapping relationship between the at least one service type and the at least one transmission configuration, accuracy of determining the target carrier can be improved.

Optionally, in this embodiment of this application, step 902 may be specifically implemented by the following steps 902a and 902b, or by the following steps 902a and 902c.

Step 902a: The target UE obtains, based on the target mapping relationship, configuration information related to the layer 2 ID from the target mapping relationship.

Optionally, in this embodiment of this application, the configuration information may include a service type associated with the layer 2 ID, a carrier associated with the layer 2 ID, and a transmission configuration associated with the layer 2 ID.

Step 902b: In a case that the configuration information meets a fifth condition, the target UE transmits the target service by using the at least two carriers.

Optionally, in this embodiment of this application, the fifth condition may include at least one of the following (8.1) and (8.2):
(8.1) All transmission configurations associated with the layer 2 ID uniformly indicate support for the SL CA operation, or uniformly indicate no support for the SL single-carrier operation.
(8.2) An intersection of a first carrier set and a second carrier set includes P carriers, where P is an integer greater than 1, the first carrier set includes all carriers associated with the layer 2 ID, and the second carrier set includes carriers in an SL configuration, where the SL configuration is at least one of an SL preconfiguration, a system information block (System Information Block, SIB) 12 configuration, and an RRC reconfiguration.

In this embodiment of this application, because the fifth condition may include at least one of the foregoing (8.1) and (8.2), in a case that the configuration information meets different conditions, the target UE can transmit the target service by using the at least two carriers, thereby improving flexibility of transmitting the target service by the target UE by using the at least two carriers.

Step 902c: In a case that the configuration information meets a sixth condition, the target UE transmits the target service by using the single carrier.

In this embodiment of this application, because the target UE may obtain the configuration information related to the layer 2 ID from the target mapping relationship, and transmit the target service by using the at least two carriers in the case that the configuration information meets the fifth condition, or transmit the target service by using the single carrier in the case that the configuration information meets the sixth condition, flexibility of transmitting the target service by the target UE can be improved.

Optionally, in this embodiment of this application, the sixth condition may include at least one of the following (9.1) to (9.4):
(9.1) A first transmission configuration in all transmission configurations associated with the layer 2 ID indicates support for the SL CA operation or no support for the SL single-carrier operation, and a second transmission configuration in all the transmission configurations indicates no support for the SL CA operation or support for the SL single-carrier operation.

Optionally, in this embodiment of this application, the first transmission configuration is part of all the transmission configurations, and the second transmission configuration is part of all the transmission configurations other than the first transmission configuration.

(9.2) All the transmission configurations associated with the layer 2 ID uniformly indicate no support for the SL CA operation, or uniformly indicate support for the SL single-carrier operation.

(9.3) There is no transmission configuration associated with the layer 2 ID.

It may be understood that the upper layer does not provide the mapping between the service type and the transmission configuration related to the layer 2 ID.

(9.4) An intersection of a first carrier set and a second carrier set includes one carrier, the first carrier set includes all carriers associated with the layer 2 ID, and the second carrier set includes carriers in an SL configuration, where the SL configuration is at least one of an SL preconfiguration, a SIB12 configuration, and an RRC reconfiguration.

In this embodiment of this application, because the sixth condition may include at least one of the foregoing (9.1) to (9.4), in a case that the configuration information meets different conditions, the target UE can transmit the target service by using the single carrier, thereby improving flexibility of transmitting the target service by the target UE by using the single carrier.

Optionally, in this embodiment of this application, the one carrier is selected by the target UE from Q carriers in the intersection of the first carrier set and the second carrier set based on a target parameter, where Q is an integer greater than 1.

Optionally, in this embodiment of this application, the target parameter may include at least one of the following: a CBR of the carrier; a priority of the carrier; and a preset carrier order.

Optionally, in this embodiment of this application, if the target parameter is the CBR of the carrier, the one carrier may be a carrier with a smallest CBR value among the Q carriers; if the target parameter is the priority of the carrier, the one carrier may be a carrier with a smallest priority value (that is, a highest priority) among the Q carriers; or if the target parameter is the preset carrier order, the preset carrier order may be an index order of a carrier configuration list, an ascending order of frequency values, or the like.

In this embodiment of this application, because the target parameter may include at least one of the CBR of the carrier, the priority of the carrier, and the preset carrier order, flexibility of selecting the one carrier from the Q carriers by the target UE can be improved.

The following describes a service transmission method provided in an embodiment of this application by using an example.

For example, assuming that both service 1 and service 2 are mapped to F1 and F2 (that is, the foregoing Q carriers), and that an associated transmission configuration indicates no support for SL CA, and that service 3 is mapped to F3 and F4, and that an associated transmission configuration indicates support for SL CA, target UE may define a selection order of F1 and F2 for service 1 and service 2 according to the following rules to ensure consistent understanding at a transmit end and a receive end.
(a) The foregoing one carrier is selected based on a CBR value of the carrier: A carrier with a smallest CBR value is preferentially used, and the CBR value of the carrier may be obtained by measuring a resource pool of a corresponding carrier.

For example, if a CBR measured on F1 is 0.2 and a CBR measured on F2 is 0.5, the foregoing one carrier is F1.

(b) The foregoing one carrier is selected based on a priority of the carrier: A carrier with a smallest priority value is preferentially used, and the priority of the carrier may be obtained based on at least one of a preconfiguration, a SIB12, and an RRC reconfiguration message.

For example, if a priority (that is, a priority value) of F1 is 3, and a priority of F2 is 1, the foregoing one carrier is F2.

(c) The foregoing one carrier is selected based on an index order of a carrier configuration list (that is, the foregoing preset carrier order): A top-ranked carrier is preferentially used, and the carrier configuration list may be obtained based on at least one of a preconfiguration, a SIB12, and an RRC reconfiguration message.

For example, if the carrier configuration list is a list of {F1, F2}, the foregoing one carrier is F1.

In the service transmission method provided in this embodiment of this application, because the target UE can obtain a layer 2 ID corresponding to a broadcast service or a groupcast service, and transmit the broadcast service or groupcast service by using a single carrier or at least two carriers based on a target mapping relationship related to the layer 2 ID, the target UE itself can determine whether to use a single carrier or multiple carriers specifically when transmitting the broadcast service or groupcast service, thereby simplifying the process of determining the carrier to be used.

Further, the service transmission method provided in this embodiment of this application can improve flexibility and consistency of carrier usage in a scenario in which an NR SL single-carrier operation and a multi-carrier operation coexist, thereby achieving load balancing in SL multi-carrier communication and ensuring SL communication performance.

The message transmission method provided in the embodiments of this application may be performed by a message transmission apparatus. A message transmission apparatus provided in the embodiments of this application is described by assuming that the message transmission method is performed by the message transmission apparatus in the embodiments of this application.

With reference to FIG. 10, an embodiment of this application provides a message transmission apparatus 100. The message transmission apparatus 100 may include a sending module 101. The sending module 101 may be configured to send a first message to second UE by using a single carrier, where the first message is a message of an SL signaling radio bearer.

In a possible implementation, the message of the SL signaling radio bearer may include at least one of the following: a message in an SL unicast connection establishment process; a message in an SL RRC reconfiguration process; and a message in an SL discovery process.

In a possible implementation, the single carrier may be determined based on one of the following: a first SL carrier configuration in at least one SL carrier configuration, where the at least one SL carrier configuration is configured or preconfigured by a network-side device; and a default SL carrier configuration, where the default SL carrier configuration is configured or preconfigured by the network-side device.

In a possible implementation, the first message may include a first target message, and the first target message includes at least one of the following: a unicast connection establishment request message; a security mode command complete message; an SL UE assistance message, where the SL UE assistance message includes preferred carrier configuration information; an SL UE capability request message; an SL UE capability response message; and an SL RRC reconfiguration message.

In a possible implementation, the first message may be the SL RRC reconfiguration message, and the SL RRC reconfiguration message includes carrier configuration information; and the message transmission apparatus 100 may further include a first processing module. The first processing module may be configured to: after the sending module 101 sends the first message to the second UE by using the single carrier, in a case that a first condition is met, perform at least one of the following: sending a second message to the second UE by using at least two carriers, where the second message is a message of the SL signaling radio bearer; and performing unicast service transmission with the second UE by using at least two carriers.

In a possible implementation, the first message may be the SL RRC reconfiguration message, and the SL RRC reconfiguration message includes carrier configuration information; and the message transmission apparatus 100 may further include a second processing module. The second processing module may be configured to: after the sending module 101 sends the first message to the second UE by using the single carrier, in a case that a second condition is met, perform at least one of the following: keeping sending a second message to the second UE by using the single carrier, where the second message is a message of the SL signaling radio bearer; maintaining unicast service transmission with the second UE by using the single carrier; and re-initiating an SL RRC reconfiguration process until a first condition is met.

In a possible implementation, the message transmission apparatus 100 may further include a receiving module. The first condition may include at least one of the following: the carrier configuration information includes N lists of SL carrier configurations, and the receiving module receives an SL RRC reconfiguration complete message from the second UE, where N is an integer greater than 1; and the receiving module receives an SL RRC reconfiguration complete message from the second UE, where the SL RRC reconfiguration complete message includes M lists of SL carrier configurations, where M is a positive integer greater than 1.

In a possible implementation, a carrier configuration indicated by the carrier configuration information may be an initial configuration.

In a possible implementation, the message transmission apparatus 100 may further include a receiving module. The second condition may include at least one of the following: the carrier configuration information includes one SL carrier configuration, and the receiving module receives an SL RRC reconfiguration complete message from the second UE; the receiving module receives an SL RRC reconfiguration complete message from the second UE, where the SL RRC reconfiguration complete message includes one SL carrier configuration; the receiving module receives an SL RRC reconfiguration failure message from the second UE; a unicast connection establishment process between the message transmission apparatus 100 and the second UE fails; and the SL RRC reconfiguration process of the message transmission apparatus 100 fails.

In the message transmission apparatus provided in this embodiment of this application, because the message transmission apparatus can send the message of the SL signaling radio bearer to the second UE by using the single carrier, specific use of a single carrier for transmitting an SL unicast service and a signaling plane message is defined.

The message transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The message transmission apparatus provided in this embodiment of this application can implement each process implemented in the method embodiments in FIG. 5 to FIG. 6, with the same technical effect achieved. To avoid repetition, details are not described herein again.

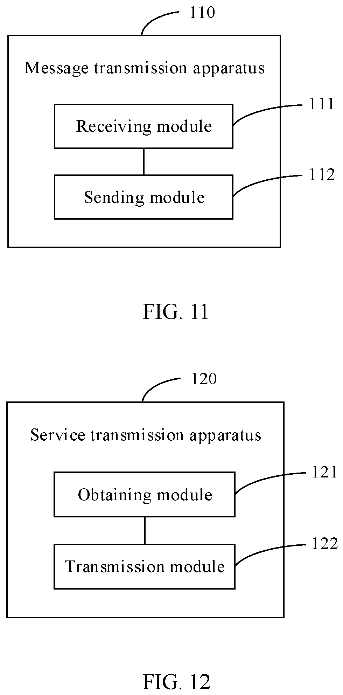

With reference to FIG. 11, an embodiment of this application provides a message transmission apparatus 110. The message transmission apparatus 110 may include a receiving module 111 and a sending module 112. The receiving module 111 may be configured to receive a first message sent by first UE by using a first carrier. The sending module 112 may be configured to send a third message to the first UE by using a second carrier, where either of the first carrier and the second carrier is a single carrier, and the first message and the third message are both messages of an SL signaling radio bearer.

In a possible implementation, the message of the SL signaling radio bearer may include at least one of the following: a message in an SL unicast connection establishment process; a message in an SL RRC reconfiguration process; and a message in an SL discovery process.

In a possible implementation, the first carrier and/or the second carrier may be determined based on one of the following: a first SL carrier configuration in at least one SL carrier configuration, where the at least one SL carrier configuration is configured or preconfigured by a network-side device; and a default SL carrier configuration, where the default SL carrier configuration is configured or preconfigured by the network-side device.

In a possible implementation, the third message may include a second target message, and the second target message includes at least one of the following: a security mode command message; a unicast connection establishment response message; an SL UE assistance message, where the SL UE assistance message includes preferred carrier configuration information; an SL UE capability request message; an SL UE capability response message; and an SL RRC reconfiguration message.

In a possible implementation, the third message may be the SL RRC reconfiguration message, and the SL RRC reconfiguration message includes carrier configuration information; and the message transmission apparatus 110 may further include a third processing module. The third processing module may be configured to: after the sending module 112 sends the third message to the first UE by using the second carrier, in a case that a third condition is met, perform at least one of the following: sending a fourth message to the first UE by using at least two carriers, where the fourth message is a message of the SL signaling radio bearer; and performing unicast service transmission with the first UE by using at least two carriers.

In a possible implementation, the third message may be the SL RRC reconfiguration message, and the SL RRC reconfiguration message includes carrier configuration information; and the message transmission apparatus 110 may further include a fourth processing module. The fourth processing module may be configured to: after the sending module 112 sends the third message to the first UE by using the second carrier, in a case that a fourth condition is met, perform at least one of the following: keeping sending a fourth message to the first UE by using the second carrier, where the fourth message is a message of the SL signaling radio bearer; maintaining unicast service transmission with the first UE by using the second carrier; and re-initiating an SL RRC reconfiguration process until a third condition is met.

In a possible implementation, the third condition may include at least one of the following: the carrier configuration information includes L SL carrier configurations, and the receiving module 11 receives an SL RRC reconfiguration complete message from the first UE, where L is an integer greater than 1; and the receiving module 11 receives an SL RRC reconfiguration complete message from the first UE, where the SL RRC reconfiguration complete message includes K SL carrier configurations, where K is a positive integer greater than 1.

In a possible implementation, a carrier configuration indicated by the carrier configuration information may be an initial configuration.

In a possible implementation, the fourth condition may include at least one of the following: the carrier configuration information includes one SL carrier configuration, and the receiving module 11 receives an SL RRC reconfiguration complete message from the first UE; the receiving module 11 receives an SL RRC reconfiguration complete message from the first UE, where the SL RRC reconfiguration complete message includes one SL carrier configuration; the receiving module 11 receives an SL RRC reconfiguration failure message from the first UE; a unicast connection establishment process between the message transmission apparatus 110 and the first UE fails; and the SL RRC reconfiguration process of the message transmission apparatus 110 fails.

In the message transmission apparatus provided in this embodiment of this application, because the message transmission apparatus can receive the message of the SL signaling radio bearer sent by the first UE and send the message of the SL signaling radio bearer to the first UE both by using single carriers, specific use of a single carrier for transmitting an SL unicast service and a signaling plane message is defined.

The message transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The message transmission apparatus provided in this embodiment of this application can implement each process implemented in the method embodiments in FIG. 7 to FIG. 8, with the same technical effect achieved. To avoid repetition, details are not described herein again.

The service transmission method provided in the embodiments of this application may be performed by a service transmission apparatus. A service transmission apparatus provided in the embodiments of this application is described by assuming that the service transmission method is performed by the service transmission apparatus in the embodiments of this application.

With reference to FIG. 12, an embodiment of this application provides a service transmission apparatus 120. The service transmission apparatus 120 may include an obtaining module 121 and a transmission module 122. The obtaining module 121 may be configured to obtain a layer 2 ID corresponding to a target service, where the target service is a broadcast service or a groupcast service. The transmission module 122 may be configured to transmit the target service by using a target carrier based on a target mapping relationship, where the target carrier is a single carrier or at least two carriers, and the target mapping relationship is related to the layer 2 ID.

In a possible implementation, the target service may include a MAC PDU corresponding to the layer 2 ID.

In a possible implementation, the target mapping relationship may include at least one of the following: a mapping relationship between at least one service type and at least one layer 2 ID; a mapping relationship between at least one layer 2 ID and at least one carrier; and a mapping relationship between at least one service type and at least one transmission configuration, where the at least one layer 2 ID includes the layer 2 ID.

In a possible implementation, each of the at least one transmission configuration may indicate any one of the following: no support for an SL CA operation; support for an SL CA operation; no support for an SL single-carrier operation; and support for an SL single-carrier operation.

In a possible implementation, the transmission module 122 may be specifically configured to: obtain, based on the target mapping relationship, configuration information related to the layer 2 ID from the target mapping relationship; and in a case that the configuration information meets a fifth condition, transmit the target service by using the at least two carriers; or in a case that the configuration information meets a sixth condition, transmit the target service by using the single carrier.

In a possible implementation, the fifth condition may include at least one of the following: all transmission configurations associated with the layer 2 ID uniformly indicate support for the SL CA operation, or uniformly indicate no support for the SL single-carrier operation; and an intersection of a first carrier set and a second carrier set includes P carriers, where P is an integer greater than 1, the first carrier set includes all carriers associated with the layer 2 ID, and the second carrier set includes carriers in an SL configuration, where the SL configuration is at least one of an SL preconfiguration, a SIB12 configuration, and an RRC reconfiguration.

In a possible implementation, the sixth condition may include at least one of the following: a first transmission configuration in all transmission configurations associated with the layer 2 ID indicates support for the SL CA operation or no support for the SL single-carrier operation, and a second transmission configuration in all the transmission configurations indicates no support for the SL CA operation or support for the SL single-carrier operation; all the transmission configurations associated with the layer 2 ID uniformly indicate no support for the SL CA operation, or uniformly indicate support for the SL single-carrier operation; there is no transmission configuration associated with the layer 2 ID; and an intersection of a first carrier set and a second carrier set includes one carrier, the first carrier set includes all carriers associated with the layer 2 ID, and the second carrier set includes carriers in an SL configuration, where the SL configuration is at least one of an SL preconfiguration, a SIB12 configuration, and an RRC reconfiguration.

In a possible implementation, the service transmission apparatus 120 may further include a selection module. The one carrier may be selected by the selection module from Q carriers in the intersection based on a target parameter, where Q is an integer greater than 1.

In a possible implementation, the target parameter may include at least one of the following: a CBR; a priority of the carrier; and a preset carrier order.

In the service transmission apparatus provided in this embodiment of this application, because the service transmission apparatus can obtain the layer 2 ID corresponding to the broadcast service or groupcast service, and transmit the broadcast service or groupcast service by using a single carrier or at least two carriers based on the target mapping relationship related to the layer 2 ID, the service transmission apparatus itself can determine whether to use a single carrier or multiple carriers specifically when transmitting the broadcast service or groupcast service, thereby simplifying the process of determining the carrier to be used.

The service transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The service transmission apparatus provided in this embodiment of this application can implement each process implemented by the method embodiment in FIG. 9, with the same technical effect achieved. To avoid repetition, details are not described herein again.

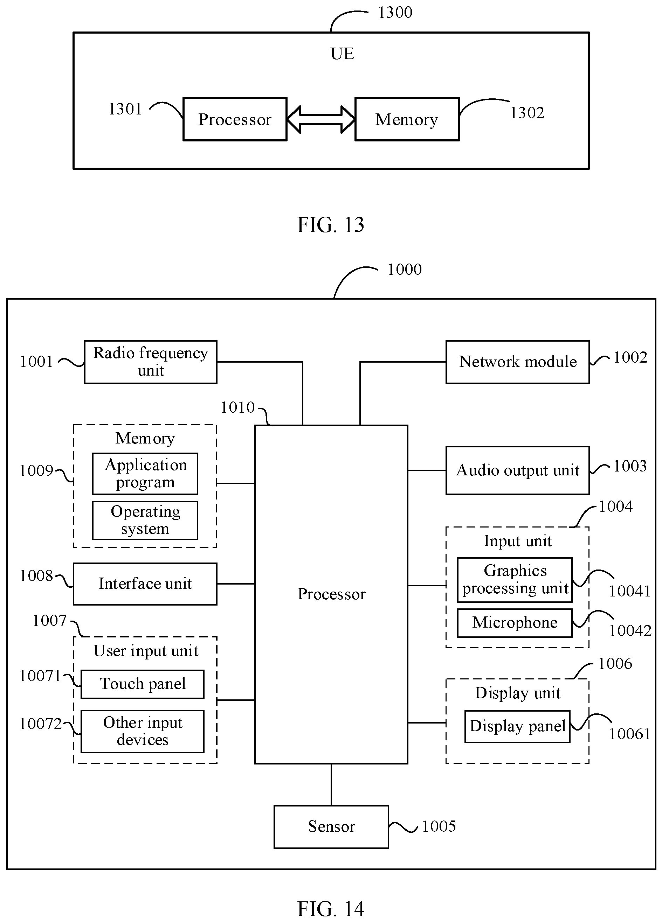

Optionally, as shown in FIG. 13, an embodiment of this application further provides UE 1300, including a processor 1301 and a memory 1302. The memory 1302 stores a program or instructions capable of running on the processor 1301, and for example, when the UE 1300 is the first UE, when the program or instructions are executed by the processor 1301, the steps of the method embodiment on the first UE side are implemented, with the same technical effect achieved; when the UE 1300 is the second UE, when the program or instructions are executed by the processor 1301, the steps of the method embodiment on the second UE side are implemented, with the same technical effect achieved; or when the UE 1300 is the target UE, when the program or instructions are executed by the processor 1301, the steps of the method embodiment on the target UE side are implemented, with the same technical effect achieved.

An embodiment of this application further provides UE, including a processor and a communication interface. The communication interface is configured to send a first message to second UE by using a single carrier, where the first message is a message of an SL signaling radio bearer. The UE embodiment corresponds to the foregoing method embodiment on the first UE side, and each implementation process and implementation of the foregoing method embodiment can be applied to the UE embodiment, with the same technical effect achieved.

Alternatively, the communication interface is configured to: receive a first message sent by first UE by using a first carrier; and send a third message to the first UE by using a second carrier, where either of the first carrier and the second carrier is a single carrier, and the first message and the third message are both messages of an SL signaling radio bearer. The UE embodiment corresponds to the foregoing method embodiment on the second UE side, and each implementation process and implementation of the foregoing method embodiment can be applied to the UE embodiment, with the same technical effect achieved.

Alternatively, the processor is configured to obtain a layer 2 ID corresponding to a target service, where the target service is a broadcast service or a groupcast service; and transmit the target service by using a target carrier based on a target mapping relationship, where the target carrier is a single carrier or at least two carriers, and the target mapping relationship is related to the layer 2 ID. The UE embodiment corresponds to the foregoing method embodiment on the target UE side, and each implementation process and implementation of the foregoing method embodiment can be applied to the UE embodiment, with the same technical effect achieved.

Specifically, FIG. 14 is a schematic diagram of a hardware structure of UE for implementing an embodiment of this application.

The UE 1000 includes but is not limited to at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the UE 1000 may further include a power supply (for example, a battery) supplying power to all components. Optionally, the power supply may be logically connected to the processor 1010 through a power management system. In this way, functions such as charge management, discharge management, and power consumption management are implemented by using the power management system. The structure of the UE shown in FIG. 14 does not constitute a limitation on the UE. The UE may include more or fewer components than those shown in the figure, or some components are combined, or component arrangements are different. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1001 may transmit the downlink data to the processor 1010 for processing. In addition, the radio frequency unit 1001 may send uplink data to the network-side device. Usually, the radio frequency unit 1001 includes but is not limited to an antenna, an amplifier, a transceiver, a coupler, a low noise amplifier, a duplexer, and the like.

The memory 1009 may be configured to store software programs or instructions and various data. The memory 1009 may primarily include a first storage area for storing programs or instructions and a second storage area for storing data. The first storage area may store an operating system, an application program or instructions required by at least one function (such as an audio play function and an image play function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1009 in this embodiment of this application includes but is not limited to these and any other suitable types of memories.

The processor 1010 may include one or more processing units. Optionally, the processor 1010 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1010.

For example, the UE 1000 is the foregoing first UE. The radio frequency unit 1001 may be configured to send a first message to second UE by using a single carrier, where the first message is a message of an SL signaling radio bearer.

In a possible implementation, the message of the SL signaling radio bearer may include at least one of the following: a message in an SL unicast connection establishment process; a message in an SL RRC reconfiguration process; and a message in an SL discovery process.

In a possible implementation, the single carrier may be determined based on one of the following: a first SL carrier configuration in at least one SL carrier configuration, where the at least one SL carrier configuration is configured or preconfigured by a network-side device; and a default SL carrier configuration, where the default SL carrier configuration is configured or preconfigured by the network-side device.

In a possible implementation, the first message may include a first target message, and the first target message includes at least one of the following: a unicast connection establishment request message; a security mode command complete message; an SL UE assistance message, where the SL UE assistance message includes preferred carrier configuration information; an SL UE capability request message; an SL UE capability response message; and an SL RRC reconfiguration message.

In a possible implementation, the first message may be the SL RRC reconfiguration message, and the SL RRC reconfiguration message includes carrier configuration information. The processor 1010 may be configured to: after the radio frequency unit 1001 sends the first message to the second UE by using the single carrier, in a case that a first condition is met, perform at least one of the following: sending a second message to the second UE by using at least two carriers, where the second message is a message of the SL signaling radio bearer; and performing unicast service transmission with the second UE by using at least two carriers.

In a possible implementation, the first message may be the SL RRC reconfiguration message, and the SL RRC reconfiguration message includes carrier configuration information. The processor 1010 may be further configured to: after the radio frequency unit 1001 sends the first message to the second UE by using the single carrier, in a case that a second condition is met, perform at least one of the following: keeping sending a second message to the second UE by using the single carrier, where the second message is a message of the SL signaling radio bearer; maintaining unicast service transmission with the second UE by using the single carrier; and re-initiating an SL RRC reconfiguration process until a first condition is met.

In a possible implementation, the first condition may include at least one of the following: the carrier configuration information includes N lists of SL carrier configurations, and the radio frequency unit 1001 receives an SL RRC reconfiguration complete message from the second UE, where N is an integer greater than 1; and the radio frequency unit 1001 receives an SL RRC reconfiguration complete message from the second UE, where the SL RRC reconfiguration complete message includes M lists of SL carrier configurations, where M is a positive integer greater than 1.

In a possible implementation, a carrier configuration indicated by the carrier configuration information may be an initial configuration.

In a possible implementation, the second condition may include at least one of the following: the carrier configuration information includes one SL carrier configuration, and the radio frequency unit 1001 receives an SL RRC reconfiguration complete message from the second UE; the radio frequency unit 1001 receives an SL RRC reconfiguration complete message from the second UE, where the SL RRC reconfiguration complete message includes one SL carrier configuration; the radio frequency unit 1001 receives an SL RRC reconfiguration failure message from the second UE; a unicast connection establishment process between the UE 1000 and the second UE fails; and the SL RRC reconfiguration process of the UE 1000 fails.

In the UE provided in this embodiment of this application, because the UE can send the message of the SL signaling radio bearer to the second UE by using the single carrier, specific use of a single carrier for transmitting an SL unicast service and a signaling plane message is defined.

The UE provided in this embodiment of this application can implement each process implemented by the first UE in the foregoing method embodiment, with the same technical effect achieved. To avoid repetition, details are not described herein again.

For example, the UE 1000 is the foregoing second UE. The radio frequency unit 1001 may be configured to receive a first message sent by first UE by using a first carrier; and may be configured to send a third message to the first UE by using a second carrier, where either of the first carrier and the second carrier is a single carrier, and the first message and the third message are both messages of an SL signaling radio bearer.

In a possible implementation, the message of the SL signaling radio bearer may include at least one of the following: a message in an SL unicast connection establishment process; a message in an SL RRC reconfiguration process; and a message in an SL discovery process.

In a possible implementation, the first carrier and/or the second carrier may be determined based on one of the following: a first SL carrier configuration in at least one SL carrier configuration, where the at least one SL carrier configuration is configured or preconfigured by a network-side device; and a default SL carrier configuration, where the default SL carrier configuration is configured or preconfigured by the network-side device.

In a possible implementation, the third message may include a second target message, and the second target message includes at least one of the following: a security mode command message; a unicast connection establishment response message; an SL UE assistance message, where the SL UE assistance message includes preferred carrier configuration information; an SL UE capability request message; an SL UE capability response message; and an SL RRC reconfiguration message.

In a possible implementation, the third message may be the SL RRC reconfiguration message, and the SL RRC reconfiguration message includes carrier configuration information. The processor 1010 may be configured to: after the radio frequency unit 1001 sends the third message to the first UE by using the second carrier, in a case that a third condition is met, perform at least one of the following: sending a fourth message to the first UE by using at least two carriers, where the fourth message is a message of the SL signaling radio bearer; and performing unicast service transmission with the first UE by using at least two carriers.

In a possible implementation, the third message may be the SL RRC reconfiguration message, and the SL RRC reconfiguration message includes carrier configuration information. The processor 1010 may be further configured to: after the radio frequency unit 1001 sends the third message to the first UE by using the second carrier, in a case that a fourth condition is met, perform at least one of the following: keeping sending a fourth message to the first UE by using the second carrier, where the fourth message is a message of the SL signaling radio bearer; maintaining unicast service transmission with the first UE by using the second carrier; and re-initiating an SL RRC reconfiguration process until a third condition is met.

In a possible implementation, the third condition may include at least one of the following: the carrier configuration information includes L SL carrier configurations, and the radio frequency unit 1001 receives an SL RRC reconfiguration complete message from the first UE, where L is an integer greater than 1; and the radio frequency unit 1001 receives an SL RRC reconfiguration complete message from the first UE, where the SL RRC reconfiguration complete message includes K SL carrier configurations, where K is a positive integer greater than 1.

In a possible implementation, a carrier configuration indicated by the carrier configuration information may be an initial configuration.

In a possible implementation, the fourth condition may include at least one of the following: the carrier configuration information includes one SL carrier configuration, and the radio frequency unit 1001 receives an SL RRC reconfiguration complete message from the first UE; the radio frequency unit 1001 receives an SL RRC reconfiguration complete message from the first UE, where the SL RRC reconfiguration complete message includes one SL carrier configuration; the radio frequency unit 1001 receives an SL RRC reconfiguration failure message from the first UE; a unicast connection establishment process between the UE 1000 and the first UE fails; and the SL RRC reconfiguration process of the UE 1000 fails.

In the UE provided in this embodiment of this application, because the UE can receive the message of the SL signaling radio bearer sent by the first UE and send the message of the SL signaling radio bearer to the first UE both by using single carriers, specific use of a single carrier for transmitting an SL unicast service and a signaling plane message is defined.

The UE provided in this embodiment of this application can implement each process implemented by the second UE in the foregoing method embodiment, with the same technical effect achieved. To avoid repetition, details are not described herein again.

For example, the UE 1000 is the foregoing target UE. The processor 1010 may be configured to obtain a layer 2 ID corresponding to a target service, where the target service is a broadcast service or a groupcast service; and may be configured to transmit the target service by using a target carrier based on a target mapping relationship, where the target carrier is a single carrier or at least two carriers, and the target mapping relationship is related to the layer 2 ID.

In a possible implementation, the target service may include a MAC PDU corresponding to the layer 2 ID.

In a possible implementation, the target mapping relationship may include at least one of the following: a mapping relationship between at least one service type and at least one layer 2 ID; a mapping relationship between at least one layer 2 ID and at least one carrier; and a mapping relationship between at least one service type and at least one transmission configuration, where the at least one layer 2 ID includes the layer 2 ID.

In a possible implementation, each of the at least one transmission configuration may indicate any one of the following: no support for an SL CA operation; support for an SL CA operation; no support for an SL single-carrier operation; and support for an SL single-carrier operation.

In a possible implementation, the processor 1010 may be specifically configured to: obtain, based on the target mapping relationship, configuration information related to the layer 2 ID from the target mapping relationship; and in a case that the configuration information meets a fifth condition, transmit the target service by using the at least two carriers; or in a case that the configuration information meets a sixth condition, transmit the target service by using the single carrier.

In a possible implementation, the fifth condition may include at least one of the following: all transmission configurations associated with the layer 2 ID uniformly indicate support for the SL CA operation, or uniformly indicate no support for the SL single-carrier operation; and an intersection of a first carrier set and a second carrier set includes P carriers, where P is an integer greater than 1, the first carrier set includes all carriers associated with the layer 2 ID, and the second carrier set includes carriers in an SL configuration, where the SL configuration is at least one of an SL preconfiguration, a SIB12 configuration, and an RRC reconfiguration.

In a possible implementation, the sixth condition may include at least one of the following: a first transmission configuration in all transmission configurations associated with the layer 2 ID indicates support for the SL CA operation or no support for the SL single-carrier operation, and a second transmission configuration in all the transmission configurations indicates no support for the SL CA operation or support for the SL single-carrier operation; all the transmission configurations associated with the layer 2 ID uniformly indicate no support for the SL CA operation, or uniformly indicate support for the SL single-carrier operation; there is no transmission configuration associated with the layer 2 ID; and an intersection of a first carrier set and a second carrier set includes one carrier, the first carrier set includes all carriers associated with the layer 2 ID, and the second carrier set includes carriers in an SL configuration, where the SL configuration is at least one of an SL preconfiguration, a SIB12 configuration, and an RRC reconfiguration.

In a possible implementation, the one carrier may be selected by the processor 1010 from Q carriers in the intersection based on a target parameter, where Q is an integer greater than 1.

In a possible implementation, the target parameter may include at least one of the following: a CBR; a priority of the carrier; and a preset carrier order.

In the UE provided in this embodiment of this application, because the UE can obtain the layer 2 ID corresponding to the broadcast service or groupcast service, and transmit the broadcast service or groupcast service by using a single carrier or at least two carriers based on the target mapping relationship related to the layer 2 ID, the UE itself can determine whether to use a single carrier or multiple carriers specifically when transmitting the broadcast service or groupcast service, thereby simplifying the process of determining the carrier to be used.

The UE provided in this embodiment of this application can implement each process implemented by the target UE in the foregoing method embodiment, with the same technical effect achieved. To avoid repetition, details are not described herein again.

An embodiment of this application further provides a readable storage medium. The readable storage medium stores a program or instructions. When the program or instructions are executed by a processor, each process of the foregoing message/service transmission method embodiment is implemented, with the same technical effect achieved. To avoid repetition, details are not described herein again.

The processor is a processor in the terminal in the foregoing embodiment. The readable storage medium may be non-volatile or non-transitory. The readable storage medium may include a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing message/service transmission method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing message/service transmission method embodiment, with the same technical effect achieved. To avoid repetition, details are not described herein again.

An embodiment of this application further provides a communication system, including first UE and second UE. The first UE may be configured to perform the steps of the method on the first UE side, and the second UE may be configured to perform the steps of the method on the second UE side.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A message transmission method, wherein the method comprises:
sending, by first user equipment UE, a first message to second UE by using a single carrier, wherein
the first message is a message of a sidelink SL signaling radio bearer.

2. The method according to claim 1, wherein the message of the SL signaling radio bearer comprises at least one of the following:
a message in an SL unicast connection establishment process;
a message in a sidelink radio resource control SL RRC reconfiguration process; and
a message in an SL discovery process.

3. The method according to claim 1, wherein the single carrier is determined based on one of the following:
a first SL carrier configuration in at least one SL carrier configuration, wherein the at least one SL carrier configuration is configured or preconfigured by a network-side device; and
a default SL carrier configuration, wherein the default SL carrier configuration is configured or preconfigured by the network-side device.

4. The method according to claim 1, wherein the first message comprises a first target message, and the first target message comprises at least one of the following:
a unicast connection establishment request message;
a security mode command complete message;
an SL UE assistance message, wherein the SL UE assistance message comprises preferred carrier configuration information;
an SL UE capability request message;
an SL UE capability response message; and
an SL RRC reconfiguration message.

5. The method according to claim 4, wherein the first message is the SL RRC reconfiguration message, and the SL RRC reconfiguration message comprises carrier configuration information; and
after the sending, by first UE, a first message to second UE by using a single carrier, the method further comprises:
in a case that a first condition is met, performing, by the first UE, at least one of the following:
sending a second message to the second UE by using at least two carriers, wherein the second message is a message of the SL signaling radio bearer; and
performing unicast service transmission with the second UE by using at least two carriers.

6. The method according to claim 4, wherein the first message is the SL RRC reconfiguration message, and the SL RRC reconfiguration message comprises carrier configuration information; and
after the sending, by first UE, a first message to second UE by using a single carrier, the method further comprises:
in a case that a second condition is met, performing, by the first UE, at least one of the following:
keeping sending a second message to the second UE by using the single carrier, wherein the second message is a message of the SL signaling radio bearer;
maintaining unicast service transmission with the second UE by using the single carrier; and
re-initiating an SL RRC reconfiguration process until a first condition is met.

7. The method according to claim 5 or 6, wherein
the first condition comprises at least one of the following:
the carrier configuration information comprises N lists of SL carrier configurations, and the first UE receives an SL RRC reconfiguration complete message from the second UE, wherein N is an integer greater than 1; and
the first UE receives an SL RRC reconfiguration complete message from the second UE, wherein the SL RRC reconfiguration complete message comprises M lists of SL carrier configurations, wherein M is a positive integer greater than 1.

8. The method according to claim 5 or 6, wherein a carrier configuration indicated by the carrier configuration information is an initial configuration.

9. The method according to claim 6, wherein
the second condition comprises at least one of the following:
the carrier configuration information comprises one SL carrier configuration, and the first UE receives an SL RRC reconfiguration complete message from the second UE;
the first UE receives an SL RRC reconfiguration complete message from the second UE, wherein the SL RRC reconfiguration complete message comprises one SL carrier configuration;
the first UE receives an SL RRC reconfiguration failure message from the second UE;
a unicast connection establishment process between the first UE and the second UE fails; and
the SL RRC reconfiguration process of the first UE fails.

10. A message transmission method, wherein the method comprises:
receiving, by second UE, a first message sent by first UE by using a first carrier; and
sending, by the second UE, a third message to the first UE by using a second carrier, wherein
either of the first carrier and the second carrier is a single carrier, and the first message and the third message are both messages of an SL signaling radio bearer.

11. The method according to claim 10, wherein the message of the SL signaling radio bearer comprises at least one of the following:
a message in an SL unicast connection establishment process;
a message in an SL RRC reconfiguration process; and
a message in an SL discovery process.

12. The method according to claim 10, wherein the first carrier and/or the second carrier are/is determined based on one of the following:
a first SL carrier configuration in at least one SL carrier configuration, wherein the at least one SL carrier configuration is configured or preconfigured by a network-side device; and
a default SL carrier configuration, wherein the default SL carrier configuration is configured or preconfigured by the network-side device.

13. The method according to claim 10, wherein the third message comprises a second target message, and the second target message comprises at least one of the following:
a security mode command message;
a unicast connection establishment response message;
an SL UE assistance message, wherein the SL UE assistance message comprises preferred carrier configuration information;
an SL UE capability request message;
an SL UE capability response message; and
an SL RRC reconfiguration message.

14. The method according to claim 13, wherein the third message is the SL RRC reconfiguration message, and the SL RRC reconfiguration message comprises carrier configuration information; and
after the sending, by the second UE, a third message to the first UE by using a second carrier, the method further comprises:
in a case that a third condition is met, performing, by the second UE, at least one of the following:
sending a fourth message to the first UE by using at least two carriers, wherein the fourth message is a message of the SL signaling radio bearer; and
performing unicast service transmission with the first UE by using at least two carriers.

15. The method according to claim 13, wherein the third message is the SL RRC reconfiguration message, and the SL RRC reconfiguration message comprises carrier configuration information; and
after the sending, by the second UE, a third message to the first UE by using a second carrier, the method further comprises:
in a case that a fourth condition is met, performing, by the second UE, at least one of the following:
keeping sending a fourth message to the first UE by using the second carrier, wherein the fourth message is a message of the SL signaling radio bearer;
maintaining unicast service transmission with the first UE by using the second carrier; and
re-initiating an SL RRC reconfiguration process until a third condition is met.

16. The method according to claim 14 or 15, wherein
the third condition comprises at least one of the following:
the carrier configuration information comprises L SL carrier configurations, and the second UE receives an SL RRC reconfiguration complete message from the first UE, wherein L is an integer greater than 1; and
the second UE receives an SL RRC reconfiguration complete message from the first UE, wherein the SL RRC reconfiguration complete message comprises K SL carrier configurations, wherein K is a positive integer greater than 1.

17. The method according to claim 14 or 15, wherein a carrier configuration indicated by the carrier configuration information is an initial configuration.

18. The method according to claim 15, wherein
the fourth condition comprises at least one of the following:
the carrier configuration information comprises one SL carrier configuration, and the second UE receives an SL RRC reconfiguration complete message from the first UE;
the second UE receives an SL RRC reconfiguration complete message from the first UE, wherein the SL RRC reconfiguration complete message comprises one SL carrier configuration;
the second UE receives an SL RRC reconfiguration failure message from the first UE;
a unicast connection establishment process between the second UE and the first UE fails; and
the SL RRC reconfiguration process of the second UE fails.

19. A service transmission method, wherein the method comprises:
obtaining, by target UE, a layer 2 ID corresponding to a target service, wherein the target service is a broadcast service or a groupcast service; and
transmitting, by the target UE, the target service by using a target carrier based on a target mapping relationship, wherein the target carrier is a single carrier or at least two carriers, and the target mapping relationship is related to the layer 2 ID.

20. The method according to claim 19, wherein the target service comprises a medium access control protocol data unit MAC PDU corresponding to the layer 2 ID.

21. The method according to claim 19, wherein
the target mapping relationship comprises at least one of the following:
a mapping relationship between at least one service type and at least one layer 2 ID;
a mapping relationship between at least one layer 2 ID and at least one carrier; and
a mapping relationship between at least one service type and at least one transmission configuration, wherein
the at least one layer 2 ID comprises the layer 2 ID.

22. The method according to claim 21, wherein
each of the at least one transmission configuration indicates any one of the following:
no support for an SL CA operation;
support for an SL CA operation;
no support for an SL single-carrier operation; and
support for an SL single-carrier operation.

23. The method according to claim 22, wherein the transmitting, by the target UE, the target service by using a target carrier based on a target mapping relationship comprises:
obtaining, by the target UE based on the target mapping relationship, configuration information related to the layer 2 ID from the target mapping relationship; and
in a case that the configuration information meets a fifth condition, transmitting, by the target UE, the target service by using the at least two carriers; or in a case that the configuration information meets a sixth condition, transmitting, by the target UE, the target service by using the single carrier.

24. The method according to claim 23, wherein
the fifth condition comprises at least one of the following:
all transmission configurations associated with the layer 2 ID uniformly indicate support for the SL CA operation, or uniformly indicate no support for the SL single-carrier operation; and
an intersection of a first carrier set and a second carrier set comprises P carriers, wherein P is an integer greater than 1, the first carrier set comprises all carriers associated with the layer 2 ID, and the second carrier set comprises carriers in an SL configuration, wherein the SL configuration is at least one of an SL preconfiguration, a system information block SIB12 configuration, and an RRC reconfiguration.

25. The method according to claim 23, wherein
the sixth condition comprises at least one of the following:
a first transmission configuration in all transmission configurations associated with the layer 2 ID indicates support for the SL CA operation or no support for the SL single-carrier operation, and a second transmission configuration in all the transmission configurations indicates no support for the SL CA operation or support for the SL single-carrier operation;
all the transmission configurations associated with the layer 2 ID uniformly indicate no support for the SL CA operation, or uniformly indicate support for the SL single-carrier operation;
there is no transmission configuration associated with the layer 2 ID; and
an intersection of a first carrier set and a second carrier set comprises one carrier, the first carrier set comprises all carriers associated with the layer 2 ID, and the second carrier set comprises carriers in an SL configuration, wherein the SL configuration is at least one of an SL preconfiguration, a SIB12 configuration, and an RRC reconfiguration.

26. The method according to claim 25, wherein the one carrier is selected by the target UE from Q carriers in the intersection based on a target parameter, wherein Q is an integer greater than 1.

27. The method according to claim 26, wherein
the target parameter comprises at least one of the following:
a channel busy ratio CBR of the carrier;
a priority of the carrier; and
a preset carrier order.

28. A message transmission apparatus, wherein the apparatus comprises a sending module, wherein
the sending module is configured to send a first message to second UE by using a single carrier, wherein
the first message is a message of an SL signaling radio bearer.

29. A message transmission apparatus, wherein the apparatus comprises a receiving module and a sending module, wherein
the receiving module is configured to receive a first message sent by first UE by using a first carrier; and
the sending module is configured to send a third message to the first UE by using a second carrier, wherein
either of the first carrier and the second carrier is a single carrier, and the first message and the third message are both messages of an SL signaling radio bearer.

30. A service transmission apparatus, wherein the apparatus comprises an obtaining module and a transmission module, wherein
the obtaining module is configured to obtain a layer 2 ID corresponding to a target service, wherein the target service is a broadcast service or a groupcast service; and
the transmission module is configured to transmit the target service by using a target carrier based on a target mapping relationship, wherein the target carrier is a single carrier or at least two carriers, and the target mapping relationship is related to the layer 2 ID.

31. UE, comprising a processor and a memory, wherein the memory stores a program or instructions capable of running on the processor, and when the program or instructions are executed by the processor, the steps of the message transmission method according to any one of claims 1 to 9 are implemented, or the steps of the message transmission method according to any one of claims 10 to 18 are implemented, or the steps of the message transmission method according to any one of claims 19 to 27 are implemented.

32. A readable storage medium, wherein the readable storage medium stores a program or instructions, and when the program or instructions are executed by a processor of first UE, the steps of the message transmission method according to any one of claims 1 to 9 are implemented, or when the program or instructions are executed by a processor of second UE, the steps of the message transmission method according to any one of claims 10 to 18 are implemented, or when the program or instructions are executed by a processor of target UE, the steps of the message transmission method according to any one of claims 19 to 27 are implemented.

33. A computer program product, wherein the computer program product is executed by at least one processor to implement the message transmission method according to any one of claims 1 to 9, or implement the message transmission method according to any one of claims 10 to 18, or implement the message transmission method according to any one of claims 19 to 27.

34. An electronic device, wherein the electronic device is configured to perform the message transmission method according to any one of claims 1 to 9, or implement the message transmission method according to any one of claims 10 to 18, or implement the message transmission method according to any one of claims 19 to 27.

35. A chip, wherein the chip comprises a processor and a communication interface, wherein the communication interface is coupled to the processor, and the processor is configured to run a program or instructions to implement the message transmission method according to any one of claims 1 to 9, or implement the message transmission method according to any one of claims 10 to 18, or implement the message transmission method according to any one of claims 19 to 27.
